# EUROPEAN PATENT SPECIFICATION

(11) **EP 4 250 761 B1**
(45) Date of publication and mention of the grant of the patent: **18.11.2026**
(21) Application number: 22187828.3
(22) Date of filing: 29.07.2022
(51) Int. Cl.: H04R 1/10, H02J 7/00

(54) **EARPHONE CASE AND WIRELESS EARPHONE**
KOPFHÖRERGEHÄUSE UND DRAHTLOSER KOPFHÖRER
BOÎTIER D'ÉCOUTEUR ET ÉCOUTEUR SANS FIL

(30) Priority: 23.03.2022 CN 202220659498 U
(43) Date of publication of application: 27.09.2023
(73) Proprietor: Beijing Xiaomi Mobile Software Co., Ltd., Beijing 100085 (CN)
(72) Inventor: LI, Shibo, Beijing, 100085 (CN)
(74) Representative: Dehns Germany Partnerschaft mbB

(56) References cited:
- WO-A1-2021/027084
- US-A1- 2018 152 778
- US-A1- 2020 084 532
- US-A1- 2020 221 212
- US-A1- 2021 289 282
- US-A1- 2021 377 646

## Description

### TECHNICAL FIELD

The present invention relates to a field of electronic devices, and more particularly, to an earphone case and a wireless earphone.

### BACKGROUND

A wireless earphone (a true wireless stereo earphone, i.e. a TWS earphone) is generally equipped with a charging case for storage and charging due to its compact structure and small size. The charging case generally has a profiled sink groove matched with an outer shape of an earphone body, so as to ensure the stability of an electrical connection when charging the earphone.

US2020221212A1 relates to a charging case for an earbud that has a pair of charging contacts that are configured to pass electrical power to an earbud battery. The charging case includes a raised pedestal, a pair of conductive charging pins protruding from the pedestal, and a docking magnet protruding from the pedestal proximate the charging pins.

US2021289282A1 relates to a wireless earphone charger, a wireless earphone, and a wireless earphone system that improve visibility and design of an indicator of the charger. The wireless earphone charger is configured to charge a wireless earphone including a receiving circuit configured to receive a sound signal via a wireless communication line, and an earphone rechargeable battery configured to charge power to be supplied to the receiving circuit. The wireless earphone charger includes a rechargeable battery configured to charge power to be supplied to the earphone rechargeable battery, an indicator configured to indicate a plurality of indication modes, and a controller configured to switch the indication modes. The indication modes of the indicator include a first indication mode for indicating a remaining power of the rechargeable battery, and a second indication mode for indicating a remaining power of the earphone rechargeable battery. The indicator indicates only one of the indication modes.

### SUMMARY

The present invention aims to solve at least one of the technical problems in the related art to a certain extent. To this end, embodiments of a first aspect of the present invention provide an earphone case for an earphone, which is conducive to taking out and placing the earphone with an increased degree of freedom. The embodiments of the present invention further provide a wireless earphone including the earphone case.

The present invention is defined in the independent claims, and the preferable features according to the present invention are defined in the dependent claims.

The earphone case according to the embodiments of the present invention includes an upper housing and a lower housing. The upper housing is connected to the lower housing, the lower housing has a first accommodating groove and a second accommodating groove, the first accommodating groove and the second accommodating groove are configured to accommodate a left earphone and a right earphone, respectively, and each of the first accommodating groove and the second accommodating groove has at least a top opening and a side opening. The lower housing comprises a plurality of attraction members corresponding to each of the first accommodating groove and the second accommodating groove in terms of positions, the attraction members corresponding to the first accommodating groove are configured to attract a stem of the left earphone, and the attraction members corresponding to the second accommodating groove are configured to attract a stem of the right earphone.

The lower housing of the earphone case according to the present invention is a semi-open structure, and the accommodating groove for accommodating the earphone is defined in the lower housing. The accommodating groove is open and has the opening at least in the top face and the side face, so that the earphone can be taken out and placed from the top and side and the process of taking and placing is convenient. In conjunction with the plurality of attraction members in the lower housing, the stem of the earphone can be attracted stably. An exposed portion of the earphone can be enlarged without enclosing too many areas of the earphone, thus improving the user's experience in the actual taking process.

Each of the first accommodating groove and the second accommodating groove includes a first side wall face and a second side wall face, the first side wall face and the second side wall face has an included angle, the attraction members corresponding to each of the first accommodating groove and the second accommodating groove include a first attraction member opposite to the first side wall face and a second attraction member opposite to the second side wall face.

Optionally, the first attraction member corresponding to the first accommodating groove and the first attraction member corresponding to the second accommodating groove are mirror-symmetrical, and the second attraction member corresponding to the first accommodating groove and the second attraction member corresponding to the second accommodating groove are mirror-symmetrical.

Each attraction member is a magnet, a magnetic pole direction of the first attraction member is perpendicular to a plane of the first side wall face, so that a first magnetic pole of the first attraction member face towards the side opening and a second magnetic pole of the first attraction member faces away from the side opening, and a magnetic pole direction of the second attraction member is parallel to a plane of the second side wall face, so that both a first magnetic pole and a second magnetic pole of the second attraction member have a side facing towards the side opening.

Optionally, the lower housing has a boss located between the first accommodating groove and the second accommodating groove, so as to partially separate the first accommodating groove and the second accommodating groove.

Optionally, each of the first accommodating groove and the second accommodating groove has a first bottom wall face and a second bottom wall face, the first bottom wall face is higher than the second bottom wall face; the first bottom wall face of the first accommodating groove is configured to abut with an ear bud of the left earphone, and the second bottom wall face of the first accommodating groove is configured to support a bottom of the stem of the left earphone; the first bottom wall face of the second accommodating groove is configured to abut with an ear bud of the right earphone, and the second bottom wall face of the second accommodating groove is configured to support a bottom of the stem of the right earphone.

Optionally, the top opening of each of the first accommodating groove and the second accommodating groove includes a first opening portion corresponding to the first bottom wall face and a second opening portion corresponding to the second bottom wall face, and an edge of the first opening portion is farther away from a central axis of the earphone case than an edge of the second opening portion.

Optionally, an outer edge of the lower housing has a first fitting face, the first fitting face is oblique relative to a plane orthogonal to a height direction of the lower housing, the upper housing has a second fitting face configured to be fitted with the first fitting face, and when the second fitting face is fitted with the first fitting face, the first fitting face is parallel to the second fitting face.

Optionally, the first fitting face is inclined downwards in an inward direction.

Embodiments of a second aspect of the present invention further provide a wireless earphone. The wireless earphone includes a left earphone, a right earphone and an earphone case. The earphone case is the earphone case according to any one of the above embodiments. The left earphone and the right earphone are fitted in the first accommodating groove and the second accommodating groove, respectively. The stem of the left earphone includes a first magnetic member configured to attract the attraction members corresponding to the first accommodating groove, and the stem of the right earphone includes a second magnetic member configured to attract the attraction members to the second accommodating groove.

Optionally, the first magnetic pole of the first attraction member corresponding to the first accommodating groove is opposite to a first magnetic pole of the first magnetic member, and the first magnetic pole and the second magnetic pole of the second attraction member corresponding to the first accommodating groove are opposite to the first magnetic pole and a second magnetic pole of the first magnetic member, respectively; the first magnetic pole of the first attraction member corresponding to the second accommodating groove is opposite to a first magnetic pole of the second magnetic member, and the first magnetic pole and the second magnetic pole of the second attraction member corresponding to the second accommodating groove are opposite to the first magnetic pole and a second magnetic pole of the second magnetic member, respectively.

Optionally, the magnetic poles of the first magnetic member are opposite to the magnetic poles of the second magnetic member.

Optionally, each of the first accommodating groove and the second accommodating groove is a profiled groove, the left earphone is fitted with a groove wall face of the first accommodating groove in a profiled manner, and the right earphone is fitted with a groove wall face of the second accommodating groove in a profiled manner.

### BRIEF DESCRIPTION OF THE DRAWINGS

Fig. 1 is a schematic view of a wireless earphone according to an embodiment of the present invention.
Fig. 2 is a sectional view of a wireless earphone according to an embodiment of the present invention.
Fig. 3 is a partially enlarged view of Fig. 2.
Fig. 4 is a schematic view of an earphone case according to an embodiment of the present invention.

### DETAILED DESCRIPTION

Embodiments of the present invention are described in detail below, and examples of the described embodiments are shown in accompanying drawings. The following embodiments described with reference to the accompanying drawings are exemplary and are intended to explain the present invention, rather than limit the present invention.

A charging case fitted with a rod-shaped TWS earphone may have a profiled groove in an inner shell to accommodate the earphone. However, the profiled groove of this charging case may be deep, and a traveled distance is large when the earphone is taken and placed. When an opening angle of a flappable cover of the charging case is not large enough, the flappable cover affects the taking and placing of the earphone. In addition, since a rod of the earphone is fitted in the profiled groove, the earphone can only move along an axial direction of the rod with a small degree of freedom. When the earphone is to be taken out, only an upper half of a head of the earphone can be grasped. When the earphone is to be placed, a bottom of the rod of the earphone needs to be aligned with an opening of the profiled groove, which affects the user's experience.

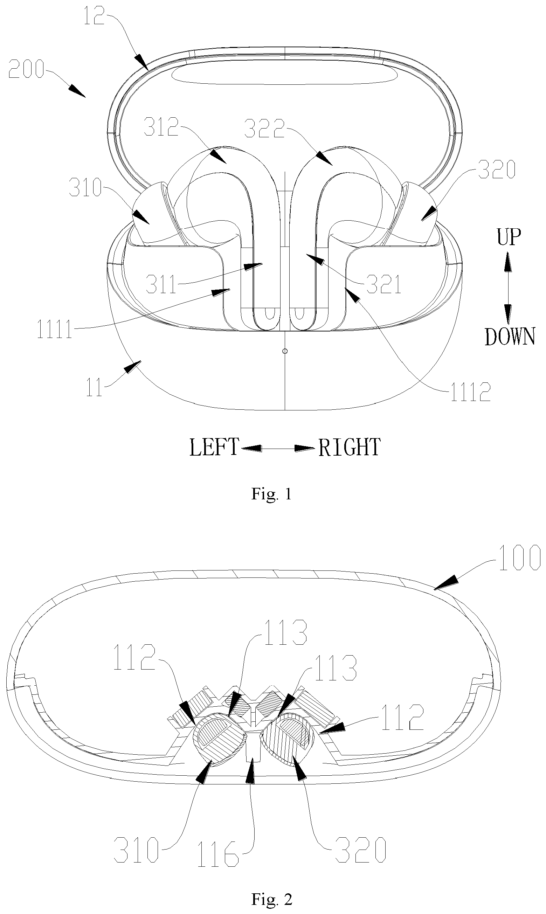

An earphone case 100 and a wireless earphone 200 according to embodiments of the present invention are described below according to Figs. 1 to 4. The wireless earphone 200 includes the earphone case 100 and a wireless earphone body. The wireless earphone body includes a left earphone 310 and a right earphone 320, and the earphone case 100 is configured to accommodate the wireless earphone body.

The earphone case 100 includes a lower housing 11 and an upper housing 12. The upper housing 12 is flippably connected to the lower housing 11 so that the upper housing 12 is flippable between an open position and a closed position. In some embodiments, the upper housing 12 is hinged with the lower housing 11.

In the closed position, the upper housing 12 and the lower housing 11 define an accommodating cavity for accommodating the wireless earphone body. The lower housing 11 has a first accommodating groove 1111 and a second accommodating groove 1112, and the first accommodating groove 1111 and the second accommodating groove 1112 are configured to accommodate the left earphone 310 and the right earphone 320, respectively. The first accommodating groove 1111 and the second accommodating groove 1112 each have an opening at least in a top face and a side face. That is, the first accommodating groove 1111 and the second accommodating groove 1112 each have at least a top opening and a side opening. The top opening is conducive to grasping an ear bud of the earphone, and the side opening is conducive to grasping a stem of the earphone.

The lower housing 11 includes a plurality of attraction members corresponding to each of the first accommodating groove 1111 and the second accommodating groove 1112. The attraction members corresponding to the first accommodating groove 1111 are configured to attract a stem 311 of the left earphone 310, and the attraction members corresponding to the second accommodating groove 1112 are configured to attract a stem 321 of the right earphone 320.

The lower housing of the earphone case according to the present invention is a semi-open structure, and the accommodating groove for accommodating the earphone is defined in the lower housing. The accommodating groove has the opening at least in the top face and the side face, so that the earphone can be taken out and placed from the top and side and the process of taking and placing is convenient. In conjunction with the plurality of attraction members in the lower housing, the stem of the earphone can be attracted stably without enclosing too many areas of the earphone, so that an exposed portion of the earphone can be enlarged, thus improving the user's experience in the actual taking process.

Moreover, the accommodating groove is located at an edge of the lower housing, that is, the accommodating groove is adjacent to the edge of the lower housing and extends from the edge of the lower housing, so that a limiting structure of the earphone case is simplified, an internal space of the earphone case can be utilized to a maximum extent, and hence the structure of the earphone case is compact, thus miniaturizing the product, making the product easy to carry, and meeting the actual use needs of TWS products.

The wireless earphone 200 in a specific embodiment according to the present invention is described below according to Figs. 1 to 4.

As shown in Fig. 1, the wireless earphone 200 includes an earphone case 100, a left earphone 310, and a right earphone 320. The left earphone 310 includes a left stem 311 and a left ear bud 312, and the right earphone 320 includes a right stem 321 and a right ear bud 322.

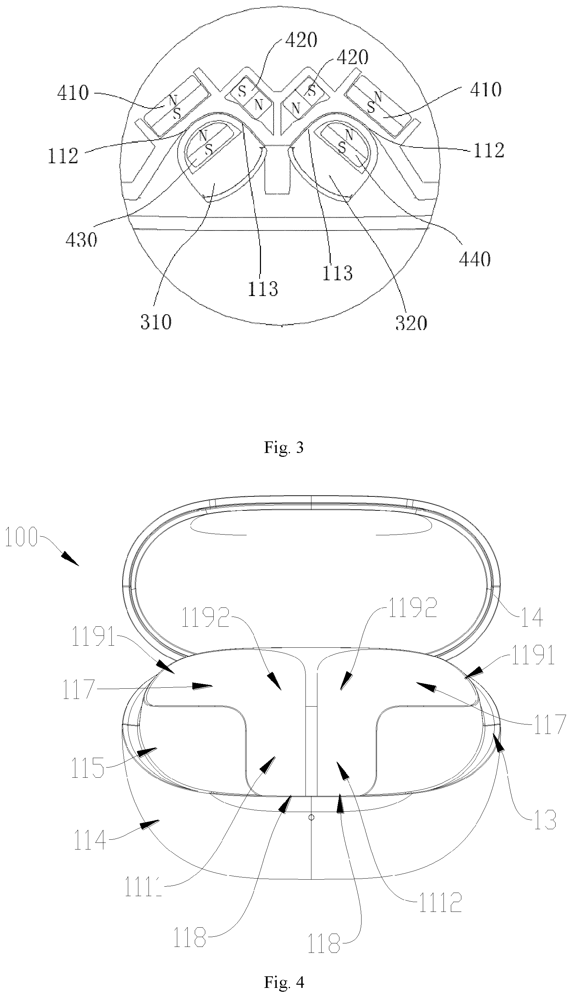

The earphone case 100 includes a lower housing 11 and an upper housing 12, and the upper housing 12 is hinged with the lower housing 11 so that the upper housing 12 is flippable between an open position and a closed position. As shown in Fig. 4, the lower housing 11 is a semi-open structure, and has a first accommodating groove 1111 and a second accommodating groove 1112 distributed in a left-right direction (as shown by the arrow in Fig. 1). The first accommodating groove 1111 on a left side is configured to accommodate the left earphone 310, and the second accommodating groove 1112 on a right side is configured to accommodate the right earphone 320. Both the first accommodating groove 1111 and the second accommodating groove 1112 have a top opening and a side opening.

As shown in Fig. 2, a side wall face of each of the first accommodating groove 1111 and the second accommodating groove 1112 includes a first side wall face 112 and a second side wall face 113 connected with each other. The first side wall face 112 and the second side wall face 113 of the first accommodating groove 1111 intersect with each other to form a certain included angle, and the first side wall face 112 and the second side wall face 113 of the second accommodating groove 1112 also intersect with each other to form a certain included angle.

Taking the first accommodating groove 1111 as an example, the first side wall face 112 faces a first direction, i.e., the first side wall face 112 is perpendicular to the first direction, and the second side wall face 113 faces a second direction, i.e., the second side wall face 113 is perpendicular to the second direction. In order to make the technical solution clearer, a depth direction of the first accommodating groove 1111 is defined as an X direction, the first direction is defined as a Y direction, and the second direction is defined as a Z direction. It can be understood that a horizontal plane where the Y direction and the Z direction are located is perpendicular to the X direction.

In some embodiments, an included angle between the first direction and the second direction is greater than or equal to 60° and less than or equal to 120°. If the included angle between the first direction and the second direction is less than 60°, the side opening of the first accommodating groove 1111 is not large enough, so that the taking and placing of the left earphone 310 at the side of the first accommodating groove 1111 is limited by the lower housing 111, thus affecting the sense of experience. If the included angle between the first direction and the second direction is greater than 120°, the side opening of the first accommodating groove 1111 is too large, so that the positioning of the stem in the accommodating groove 111 is unstable.

In this embodiment, the included angle between the first direction and the second direction is 90°, i.e., the X direction, the Y direction and the Z direction are perpendicular to each other. Therefore, the positioning and limiting of the stem in the first accommodating groove 1111 are more stable while the left earphone 320 can be taken out and placed more conveniently.

It can be understood that a structure of the side wall face of the second accommodating groove 1112 can refer to the above structure of the side wall face of the first accommodating groove 1111, which will not be repeated here.

As shown in Fig. 3, the attraction member includes a first attraction member 410 and a second attraction member 420. The first attraction member 410 is opposite to the first side wall face 112 of the first accommodating groove 1111 or the first side wall face 112 of the second accommodating groove 1112, and configured to attract the stem of the corresponding earphone in the first direction. The second attraction member 420 is opposite to the second side wall face 113 of the first accommodating groove 1111 or the second side wall face 113 of the second accommodating groove 1112, and configured to attract the stem of the corresponding earphone in the second direction. For example, the first attraction member 410 and the second attraction member 420 are inside the lower housing 11 and outside the first accommodating groove 1111 or the second accommodating groove 1112, and surround the first accommodating groove 1111 or the second accommodating groove 1112.

In some embodiments, the attraction member corresponding to the first accommodating groove 1111 and the attraction member corresponding to the second accommodating groove 1112 are mirror-symmetrical. That is, the first attraction member 410 corresponding to the first accommodating groove 1111 and the first attraction member 410 corresponding to the second accommodating groove 1112 are mirror-symmetrical, and the second attraction member 420 corresponding to the first accommodating groove 1111 and the second attraction member 420 corresponding to the second accommodating groove 1112 are mirror-symmetrical. Further, the attraction member is a magnet, and magnetic poles of the attraction member corresponding to the first accommodating groove 1111 and magnetic poles of the attraction member corresponding to the second accommodating groove 1112 are also mirror-symmetrical. That is, magnetic poles of the first attraction member 410 corresponding to the first accommodating groove 1111 and magnetic poles of the first attraction member 410 corresponding to the second accommodating groove 1112 are also mirror-symmetrical, and magnetic poles of the second attraction member 420 corresponding to the first accommodating groove 1111 and magnetic poles of the second attraction member 420 corresponding to the second accommodating groove 1112 are also mirror-symmetrical.

As shown in Fig. 3, in this embodiment, one first attraction member 410 and one second attraction member 420 correspond to the first accommodating groove 1111, and one first attraction member 410 and one second attraction member 420 correspond to the second accommodating groove 1112. That is, the first accommodating groove 1111 is correspondingly provided with one first attraction member 410 and one second attraction member 420, and the second accommodating groove 1112 is correspondingly provided with one first attraction member 410 and one second attraction member 420.

Further, a position and magnetic poles of the first attraction member 410 corresponding to the first accommodating groove 1111 and a position and magnetic poles of the first attraction member 410 corresponding to the second accommodating groove 1112 are mirror-symmetrical. A position and magnetic poles of the second attraction member 420 corresponding to the first accommodating groove 1111 and a position and magnetic poles of the second attraction member 420 corresponding to the second accommodating groove 1112 are mirror-symmetrical.

Specifically, as shown in Fig. 3, taking the first attraction member 410 and the second attraction member 420 corresponding to the first accommodating groove 1111 on the left side as an example, a magnetic pole direction of the first attraction member 410 is perpendicular to a plane of the first side wall face 112, so that a first magnetic pole (an S pole in Fig. 3) of the first attraction member 410 faces towards the side opening and a second magnetic pole (a N pole in Fig. 3) of the first attraction member 410 faces away from the side opening. In other words, the first magnetic pole of the first attraction member 410 is closer to the first side wall face 112 than the second magnetic pole of the first attraction member 410. A magnetic pole direction of the second attraction member 420 is parallel to a plane of the second side wall face 113, so that both a first magnetic pole (an S pole in Fig. 3) and a second magnetic pole (a N pole in Fig. 3) of the second attraction member 420 have a side facing towards the side opening. It can be understood that magnetic pole directions of the first attraction member 410 and the second attraction member 420 corresponding to the second accommodating groove 1112 on the right side can refer to the first accommodating groove 1111, which will not be repeated here.

Further, as shown in Fig. 2, the lower housing 11 has a boss 116, and the boss 116 is between the first accommodating groove 1111 and the second accommodating groove 1112, so as to partially separate the first accommodating groove 1111 from the second accommodating groove 1112.

As shown in Fig. 4, each of the first accommodating groove 1111 and the second accommodating groove 1112 has a first bottom wall face 117 and a second bottom wall face 118. The first bottom wall face 117 of the first accommodating groove 1111 is flush with the first bottom wall face 117 of the second accommodating groove 1112, and the second bottom wall face 118 of the first accommodating groove 1111 is flush with the second bottom wall face 118 of the second accommodating groove 1112.

As shown in Figs. 1 and 4, the first bottom wall face 117 of the first accommodating groove 1111 is higher than the second bottom wall face 118 of the first accommodating groove 1111, the first bottom wall face 117 of the first accommodating groove 1111 is configured to abut with the left ear bud 312 of the left earphone 310, and second bottom wall face 118 of the first accommodating groove 1111 is configured to support a bottom of the left stem 311 of the left earphone 310. The first bottom wall face 117 of the second accommodating groove 1112 is higher than the second bottom wall face 118 of the second accommodating groove 1112, the first bottom wall face 117 of the second accommodating groove 1112 is configured to abut with the right ear bud 322 of the right earphone 320, and the second bottom wall face 118 of the second accommodating groove 1112 is configured to support a bottom of the stem 321 of the right earphone 320. Thus, the left earphone 310 and the right earphone 320 can be placed in the earphone case 100 stably.

Further, in other embodiments, the attraction member may also be arranged at a position corresponding to the first bottom wall face 117, so as to attract the left ear bud 312 of the left earphone 310 or the right ear bud 322 of the right earphone 320, thus further improving the attraction stability of the earphone.

As shown in Fig. 4, in order to facilitate the user to take out and place the earphone, the top opening of each of the first accommodating groove 1111 and the second accommodating groove 1112 includes a first opening portion 1191 corresponding to the first bottom wall face 117 and a second opening portion 1192 corresponding to the second bottom wall face 118. An edge of the first opening portion 1191 is farther away from a central axis of the earphone case 100 than an edge of the second opening portion 1192, i.e., the first opening portion 1191 is farther away from the central axis of the earphone case 100 than the second opening portion 1192, so that the left stem 311 of the left earphone 310 is adjacent to the right stem 321 of the right earphone 320, and the left ear bud 312 faces away from the right ear bud 322, as shown in Fig. 1. In other words, a distance between the edge of the first opening portion 1191 and the central axis of the earphone case 100 is larger than a distance between the edge of the second opening portion 1192 and the central axis of the earphone case 100.

Further, as shown in Fig. 3, the left stem 311 has a first magnetic member 430 configured to attract the attraction members corresponding to the first accommodating groove 1111, and the right stem 321 has a second magnetic member 440 configured to attract the attraction members corresponding to the second accommodating groove 1112.

The first magnetic member 430 is configured to attract each of the first attraction member 410 and the second attraction member 420 corresponding to the first accommodating groove 1111, and the second magnetic member 440 is configured to attract each of the first attraction member 410 and the second attraction member 420 corresponding to the second accommodating groove 1112, thus reducing the number of parts, reducing the manufacturing difficulty, and reducing the weight of the earphone. In other embodiments, two first magnetic members 430 or two second magnetic members 440 may be provided, and are configured to attract the first attraction members 410 and the second attraction members 420 corresponding to the accommodating grooves, respectively, but this will increase the number of parts to a certain extent, increase the manufacturing difficulty, and increase the weight of the earphone. Therefore, it is preferred that the first magnetic member 430 attracts each of the first attraction member 410 and the second attraction member 420 corresponding to the first accommodating groove 1111, and the second magnetic member 440 attracts each of the first attraction member 410 and the second attraction member 420 corresponding to the second accommodating groove 1112.

In order to realize the stable positioning of the stem in the Z direction, the first attraction member 410 and the second attraction member 420 extend along the depth direction of the accommodating groove (i.e. the first accommodating groove 1111 and the second accommodating groove 1112), so that the first attraction member 410 and the second attraction member 420 have a certain length, and thus the first attraction member 410 and the second attraction member 420 generate an attraction force on the first magnetic member 430 across the depth direction of the first accommodating groove 1111 and an attraction force on the second magnetic member 440 across the depth direction of the second accommodating groove 1112. In some embodiments, the first magnetic member 430 and the second magnetic member 440 extend and have a certain length along the depth direction of the accommodating groove. Thus, the earphone body can be completely and accurately fixed in the earphone case 100. Moreover, through the attraction force between the first and second attraction members 410, 420 and the first magnetic member 430 as well as the attraction force between the first and second attraction members 410, 420 and the second magnetic member 440, the earphone body can be accurately attracted onto the earphone case 100 at a long distance, thus greatly improving the use experience of the earphone body in the process of taking and placing.

As shown in Fig. 3, the first magnetic pole (the S pole in Fig. 3) of the first attraction member 410 corresponding to the first accommodating groove 1111 on the left side is opposite to a first magnetic pole (a N pole in Fig. 3) of the first magnetic member 430, and the first magnetic pole (the S pole in Fig. 3) and the second magnetic pole (the N pole in Fig. 3) of the second attraction member 420 corresponding to the first accommodating groove 1111 are opposite to the first magnetic pole (the N pole in Fig. 3) and a second magnetic pole (an S pole in Fig. 3) of the first magnetic member 430, respectively. Similarly, a first magnetic pole (an S pole in Fig. 3) of the first attraction member 410 corresponding to the second accommodating groove 1112 on the right side is opposite to a first magnetic pole (a N pole in Fig. 3) of the second magnetic member 440, and a first magnetic pole (an S pole in Fig. 3) and a second magnetic pole (a N pole in Fig. 3) of the second attraction member 420 corresponding to the second accommodating groove 1112 are opposite to the first magnetic pole (the N pole in Fig. 3) and a second magnetic pole (an S pole in Fig. 3) of the second magnetic member 440, respectively.

Specifically, taking the first accommodating groove 1111 as an example, the first attraction member 410 and the second attraction member 420 corresponding to the first accommodating groove 1111 have an included angle of 90°, and the two magnetic poles of the first attraction member 410, the two magnetic poles of the first magnetic member 430 and the two magnetic poles of the second attraction member 420 are arranged along the first direction. Polarities of opposite magnetic poles of the first magnetic member 430 and the first attraction member 410 in the first direction are opposite, and polarities of two pairs of opposite magnetic poles of the first magnetic member 430 and the second attraction member 420 in the second direction are opposite.

Further, in other embodiments, a magnetic pole direction of the first magnetic member 430 may be opposite to a magnetic pole direction of the second magnetic member 440, so as to avoid misplacing the left earphone 310 and the right earphone 320 when they are placed.

In some embodiments, the first accommodating groove 1111 and the second accommodating groove 1112 are each a profiled groove, the left earphone 310 is fitted with a groove wall face of the first accommodating groove 1111 in a profiled manner, and the right earphone 320 is fitted with a groove wall face of the second accommodating groove 1112 in a profiled manner, so that the left earphone 310 and the right earphone 320 can be better fitted with the first accommodating groove 1111 and the second accommodating groove 1112, respectively.

When the upper housing 12 of the wireless earphone 200 according to this embodiment is in the closed position, the upper housing 12 covers an upper side and a front side of the accommodating groove. When the upper housing 12 is in the open position, the upper side and the front side of the accommodating groove are in an exposed state, and most of the structure of the wireless earphone body is exposed. At this time, the wireless earphone body can be taken out from three directions, namely, the X direction, the Y direction or the Z direction. Thus, the wireless earphone body is easy to take out and place without being blocked by the upper housing 12. Compared with a technical solution in the related art, in which the charging case adopts a structure of a profiled sink groove and the wireless earphone can only be pulled out upwards vertically, the overall structural design of the earphone case in this embodiment is more concise, it is more convenient to take out and place the earphone, the traveled distance for taking out and placing the earphone is greatly shortened, and the resistance is small. In addition, when the upper housing 12 is opened, more portions of the earphone are exposed, so that it is more convenient to pick up the earphone.

In this embodiment, as shown in Fig. 4, an outer edge of the lower housing 11 has a first fitting face 13, and the first fitting face 13 is oblique relative to a plane (a horizontal plane in Fig. 4) orthogonal to a height direction of the lower housing 11. For example, an upper edge portion of an outer surface of the lower housing 11 has the first fitting face 13. The upper housing 12 has a second fitting face 14, and the second fitting face 14 may be fitted with the first fitting face 13. Moreover, when the first fitting face 13 is fitted with the second fitting face 14, the first fitting face 13 is parallel to the second fitting face 14, so that a good fit can be formed between the upper housing 12 and the lower housing 11.

Further, in order to avoid sliding between the upper housing 12 and the lower housing 11, the first fitting face 13 is inclined downwards in an inward direction, and the second fitting face 14 is fitted with the first fitting face 13.

According to the invention, as shown in Fig. 4, the lower housing 11 includes an outer shell 114 and a middle shell 115, the middle shell 115 is in the outer shell 114, and the first accommodating groove 1111 and the second accommodating groove 1112 are both defined in the middle shell 115. The first fitting face 13 is inclined from the outer shell 114 to the middle shell 115 from top to bottom. An opening of the outer shell 114 faces upwards and forwards. An opening shape of the outer shell 114 is adapted to an opening shape of the upper housing 12, so that the upper housing 12 is closed with the outer shell 114 in the closed position, and the upper housing 12 is movably connected to a rear edge of the opening of the outer shell 114.

That is, the upper housing 12 is movably arranged at the rear edge of the opening of the outer shell 114, and the upper housing 12 may turn forth and back by using the rear edge of the outer shell 114 as a support point. Moreover, the outer shell 114 has an opening with a certain slope, and the upper housing 12 has a covering opening corresponding to the opening. When the upper housing 12 is snapped on the outer shell 114, the covering opening is just tightly snapped on the opening, so that an enclosed space is defined between the upper housing 12 and the outer shell 114 for storing the wireless earphone body, so as to avoid the loss of the wireless earphone body.

A front edge of the opening of the outer shell 114 is located below the rear edge of the opening of the outer shell 114, a left edge and a right edge of the opening of the outer shell 114 both extend forwards and downwards from the rear edge, and the left edge and the right edge of the opening of the outer shell 114 are parallel to each other. That is, a height of the front edge of the outer shell 114 is lower than a height of the rear edge of the outer shell 114, the opening with the certain slope is defined between the rear edge of the outer shell 114 and the front edge of the outer shell 114, and the left edge and the right edge of the opening of the outer shell 114 are in a same slope surface.

To sum up, the earphone case according to the embodiments of the present invention adopts a semi-open design, and the limiting structure is simplified, thus making the earphone more compact and improving the space utilization rate of the earphone case. After a upper housing of the earphone case is opened, the earphone body is fully exposed, thus increasing the grabbing area. Moreover, barrier free grabbing can be realized in the X direction, the Y direction and the Z direction. Through the attraction of the plurality of attraction members, the wireless earphone body can be accurately attracted onto the earphone case at a long distance, and can be firmly attracted in the earphone case, thus greatly improving the use experience of the wireless earphone body in the process of taking and placing.

In the description of the present invention, it shall be understood that terms such as "central," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial" and "circumferential" should be construed to refer to the orientation as then described or as shown in the drawings under discussion. These relative terms are for convenience of description and do not indicate or imply that the device or element referred to must have a particular orientation, or be constructed and operated in a particular orientation. Thus, these terms shall not be construed as limitation on the present invention.

In addition, terms such as "first" and "second" are merely used for descriptive purposes and cannot be understood as indicating or implying relative importance or the number of technical features indicated. Thus, the features associated with "first" and "second" may explicitly or implicitly include at least one of the features. In the description of the present invention, unless otherwise specifically defined, "a plurality of" means at least two, such as two, three, etc.

In the present invention, unless otherwise explicitly specified and defined, the terms "mounted," "interconnected," "connected," "fixed" and the like are used broadly, and may be, for example, fixed connections, detachable connections, or integral connections; may also be mechanical or electrical connections or intercommunication; may also be direct connections or indirect connections via intervening structures; may also be inner communications or interactions of two elements. For those skilled in the art, the specific meaning of the above terms in the present invention can be understood according to the specific circumstances.

In the present invention, unless otherwise explicitly specified and defined, a structure in which a first feature is "on" or "below" a second feature may include an embodiment in which the first feature is in direct contact with the second feature, and may also include an embodiment in which the first feature and the second feature are not in direct contact with each other, but are contacted via an intermediate medium formed therebetween. Furthermore, a first feature "on," "above," or "on top of" a second feature may include an embodiment in which the first feature is right or obliquely "on," "above," or "on top of" the second feature, or just means that the first feature is at a height higher than that of the second feature; while a first feature "below," "under," or "on bottom of" a second feature may include an embodiment in which the first feature is right or obliquely "below," "under," or "on bottom of" the second feature, or just means that the first feature is at a height lower than that of the second feature.

In the present invention, terms such as "an embodiment," "some embodiments," "an example," "a specific example" or "some examples" means that a particular feature, structure, material, or characteristic described in connection with the embodiment or example is included in at least one embodiment or example of the present invention. Thus, the appearances of these terms in various places throughout this specification are not necessarily referring to the same embodiment or example of the present invention. Furthermore, the particular features, structures, materials, or characteristics may be combined in any suitable manner in one or more embodiments or examples. In addition, without contradiction, those skilled in the art may combine and unite different embodiments or examples or features of the different embodiments or examples described in this specification. The invention is defined by the appended claims.

## Claims

1. An earphone case (100), comprising:
an upper housing (12); and
a lower housing (11), the upper housing (12) being connected to the lower housing (11), the lower housing (11) having a first accommodating groove (1111) and a second accommodating groove (1112), and the first accommodating groove (1111) and the second accommodating groove (1112) being configured to accommodate a left earphone (310) and a right earphone (320), respectively,
wherein the lower housing (11) comprises a plurality of magnets (410, 420) corresponding to each of the first accommodating groove (1111) and the second accommodating groove (1112) in terms of positions, the magnets (410, 420) corresponding to the first accommodating groove (1111) are configured to attract a stem of the left earphone (310), and the magnets (410, 420) corresponding to the second accommodating groove (1112) are configured to attract a stem of the right earphone (320),
wherein the lower housing (11) comprises an outer shell (114) and a middle shell (115), the middle shell (115) is in the outer shell (114), and the first accommodating groove (1111) and the second accommodating groove (1112) are both defined in the middle shell (115),
wherein each of the first accommodating groove (1111) and the second accommodating groove (1112) has an opening in a top face and a side face of the middle shell (115), the opening in the top face is configured as a top opening, and the opening in the side face is configured as a side opening,
wherein each of the first accommodating groove (1111) and the second accommodating groove (1112) comprises a first side wall face (112) and a second side wall face (113), the first side wall face (112) and the second side wall face (113) have an included angle, the magnets (410, 420) corresponding to each of the first accommodating groove (1111) and the second accommodating groove (1112) comprise a first magnet (410) opposite to the first side wall face (112) and a second magnet (420) opposite to the second side wall face (113),
wherein a magnetic pole direction of the second magnet (420) is parallel to a plane of the second side wall face (113), so that both a first magnetic pole and a second magnetic pole of the second magnet (420) have a side facing towards the side opening,
**characterized in that** a magnetic pole direction of the first magnet (410) is perpendicular to a plane of the first side wall face (112), so that a first magnetic pole of the first magnet (410) faces towards the side opening and a second magnetic pole of the first magnet (410) faces away from the side opening.

2. The earphone case (100) according to claim 1, wherein the first magnet (410) corresponding to the first accommodating groove (1111) and the first magnet (410) corresponding to the second accommodating groove (1112) are mirror-symmetrical.

3. The earphone case (100) according to any one of claims 1-2, wherein the lower housing (11) has a boss (116) located between the first accommodating groove (1111) and the second accommodating groove (1112), so as to partially separate the first accommodating groove (1111) from the second accommodating groove (1112).

4. The earphone case (100) according to any one of claims 1-3, wherein each of the first accommodating groove (1111) and the second accommodating groove (1112) has a first bottom wall face (117) and a second bottom wall face (118), the first bottom wall face (117) is higher than the second bottom wall face (118),
the first bottom wall face (117) of the first accommodating groove (1111) is configured to abut with an ear bud of the left earphone (310), and the second bottom wall face (118) of the first accommodating groove (1111) is configured to support a bottom of the stem of the left earphone (310),
the first bottom wall face (117) of the second accommodating groove (1112) is configured to abut with an ear bud of the right earphone (320), and the second bottom wall face (118) of the second accommodating groove (1112) is configured to support a bottom of the stem of the right earphone (320).

5. The earphone case (100) according to claim 4, wherein the top opening of each of the first accommodating groove (1111) and the second accommodating groove (1112) comprises a first opening portion (1191) corresponding to the first bottom wall face (117) and a second opening portion (1192) corresponding to the second bottom wall face (118), and an edge of the first opening portion (1191) is farther away from a central axis of the earphone case (100) than an edge of the second opening portion (1192).

6. The earphone case (100) according to any one of claims 1-5, wherein an outer edge of the lower housing (11) has a first fitting face (13), the first fitting face (13) is oblique relative to a plane orthogonal to a height direction of the lower housing (11), the upper housing (12) has a second fitting face (14), the second fitting face (14) is configured to be fitted with the first fitting face (13), and when the second fitting face (14) is fitted with the first fitting face (13), the first fitting face (13) is parallel to the second fitting face (14).

7. The earphone case (100) according to claim 6, wherein the first fitting face (13) is inclined downwards in an inward direction.

8. A wireless earphone (200), comprising:
a left earphone (310) and a right earphone (320); and
an earphone case (100) according to any one of claims 1 to 7, wherein the left earphone (310) and the right earphone are fitted in the first accommodating groove (1111) and the second accommodating groove (1112), respectively, the stem of the left earphone (310) comprises a first magnetic member (430) configured to attract the magnets (410, 420) corresponding to the first accommodating groove (1111), and the stem of the right earphone (320) comprises a second magnetic member (440) configured to attract the magnets (410, 420) corresponding to the second accommodating groove (1112).

9. The wireless earphone (200) according to claim 8, wherein the earphone case (100) is the earphone case (100) according to claim1,
the first magnetic pole of the first magnet (410) corresponding to the first accommodating groove (1111) is opposite to a first magnetic pole of the first magnetic member (430), and the first magnetic pole and the second magnetic pole of the second magnet (420) corresponding to the first accommodating groove (1111) are opposite to the first magnetic pole and a second magnetic pole of the first magnetic member (430), respectively;
the first magnetic pole of the first magnet (410) corresponding to the second accommodating groove (1112) is opposite to a first magnetic pole of the second magnetic member (440), and the first magnetic pole and the second magnetic pole of the second magnet (420) corresponding to the second accommodating groove (1112) are opposite to the first magnetic pole and a second magnetic pole of the second magnetic member (440), respectively.

10. The wireless earphone (200) according to claim 8 or 9, wherein the magnetic poles of the first magnetic member (430) are opposite to the magnetic poles of the second magnetic member (440).

11. The wireless earphone (200) according to any one of claims 8-10, wherein each of the first accommodating groove (1111) and the second accommodating groove (1112) is a profiled groove, the left earphone (310) is fitted with a groove wall face of the first accommodating groove (1111) in a profiled manner, and the right earphone (320) is fitted with a groove wall face of the second accommodating groove (1112) in a profiled manner.

## Patentansprüche

1. Ein Ohrhörergehäuse (100), umfassend:
ein oberes Gehäuseteil (12); und
ein unteres Gehäuseteil (11), wobei das obere Gehäuseteil (12) mit dem unteren Gehäuseteil (11) verbunden ist, das untere Gehäuseteil (11) eine erste Aufnahmenut (1111) und eine zweite Aufnahmenut (1112) aufweist und die erste Aufnahmenut (1111) und die zweite Aufnahmenut (1112) dazu eingerichtet sind, einen linken Ohrhörer (310) beziehungsweise einen rechten Ohrhörer (320) aufzunehmen,
wobei das untere Gehäuseteil (11) eine Mehrzahl von Magneten (410, 420) umfasst, die jeweils der ersten Aufnahmenut (1111) und der zweiten Aufnahmenut (1112) hinsichtlich der Positionen entsprechen, wobei die Magnete (410, 420), die der ersten Aufnahmenut (1111) entsprechen, dazu eingerichtet sind, einen Schaft bzw. Stamm des linken Ohrhörers (310) anzuziehen, und die Magnete (410, 420), die der zweiten Aufnahmenut (1112) entsprechen, dazu eingerichtet sind, einen Schaft des rechten Ohrhörers (320) anzuziehen,
wobei das untere Gehäuseteil (11) eine Außenschale (114) und eine Mittelschale (115) umfasst, die Mittelschale (115) in der Außenschale (114) angeordnet ist und sowohl die erste Aufnahmenut (1111) als auch die zweite Aufnahmenut (1112) in der Mittelschale (115) definiert sind,
wobei die erste Aufnahmenut (1111) und die zweite Aufnahmenut (1112) jeweils eine Öffnung in einer Oberseite und einer Seitenfläche der Mittelschale (115) aufweisen, wobei die Öffnung in der Oberseite als obere Öffnung und die Öffnung in der Seitenfläche als seitliche Öffnung ausgebildet ist,
wobei die erste Aufnahmenut (1111) und die zweite Aufnahmenut (1112) jeweils eine erste Seitenwandfläche (112) und eine zweite Seitenwandfläche (113) umfassen, wobei die erste Seitenwandfläche (112) und die zweite Seitenwandfläche (113) einen eingeschlossenen Winkel einschließen, wobei die Magnete (410, 420), die jeweils der ersten Aufnahmenut (1111) und der zweiten Aufnahmenut (1112) entsprechen, einen ersten Magneten (410) gegenüber der ersten Seitenwandfläche (112) und einen zweiten Magneten (420) gegenüber der zweiten Seitenwandfläche (113) umfassen,
wobei eine Magnetpolrichtung des zweiten Magneten (420) parallel zu einer Ebene der zweiten Seitenwandfläche (113) verläuft, so dass sowohl ein erster Magnetpol als auch ein zweiter Magnetpol des zweiten Magneten (420) eine Seite aufweisen, die zu der seitlichen Öffnung hin gerichtet ist,
**dadurch gekennzeichnet, dass** eine Magnetpolrichtung des ersten Magneten (410) senkrecht zu einer Ebene der ersten Seitenwandfläche (112) verläuft, so dass ein erster Magnetpol des ersten Magneten (410) zu der seitlichen Öffnung hin gerichtet ist und ein zweiter Magnetpol des ersten Magneten (410) von der seitlichen Öffnung weg gerichtet ist.

2. Ohrhörergehäuse (100) nach Anspruch 1, wobei der erste Magnet (410), der der ersten Aufnahmenut (1111) entspricht, und der erste Magnet (410), der der zweiten Aufnahmenut (1112) entspricht, spiegelsymmetrisch sind.

3. Ohrhörergehäuse (100) nach einem der Ansprüche 1 bis 2, wobei das untere Gehäuseteil (11) einen Vorsprung (116) aufweist, der zwischen der ersten Aufnahmenut (1111) und der zweiten Aufnahmenut (1112) angeordnet ist, um die erste Aufnahmenut (1111) teilweise von der zweiten Aufnahmenut (1112) zu trennen.

4. Ohrhörergehäuse (100) nach einem der Ansprüche 1 bis 3, wobei die erste Aufnahmenut (1111) und die zweite Aufnahmenut (1112) jeweils eine erste Bodenwandfläche (117) und eine zweite Bodenwandfläche (118) aufweisen und die erste Bodenwandfläche (117) höher liegt als die zweite Bodenwandfläche (118),
wobei die erste Bodenwandfläche (117) der ersten Aufnahmenut (1111) dazu eingerichtet ist, an einem Ohrhörerkopf des linken Ohrhörers (310) anzuliegen, und die zweite Bodenwandfläche (118) der ersten Aufnahmenut (1111) dazu eingerichtet ist, einen Boden des Schaftes des linken Ohrhörers (310) abzustützen,
wobei die erste Bodenwandfläche (117) der zweiten Aufnahmenut (1112) dazu eingerichtet ist, an einem Ohrhörerkopf des rechten Ohrhörers (320) anzuliegen, und die zweite Bodenwandfläche (118) der zweiten Aufnahmenut (1112) dazu eingerichtet ist, einen Boden des Schaftes des rechten Ohrhörers (320) abzustützen bzw. zu tragen.

5. Ohrhörergehäuse (100) nach Anspruch 4, wobei die obere Öffnung der ersten Aufnahmenut (1111) und der zweiten Aufnahmenut (1112) jeweils einen ersten Öffnungsabschnitt (1191), der der ersten Bodenwandfläche (117) entspricht, und einen zweiten Öffnungsabschnitt (1192), der der zweiten Bodenwandfläche (118) entspricht, umfasst und wobei eine Kante des ersten Öffnungsabschnitts (1191) weiter von einer Mittelachse des Ohrhörergehäuses (100) beabstandet ist als eine Kante des zweiten Öffnungsabschnitts (1192).

6. Ohrhörergehäuse (100) nach einem der Ansprüche 1 bis 5, wobei ein Außenrand des unteren Gehäuseteils (11) eine erste Passfläche (13) aufweist, wobei die erste Passfläche (13) relativ zu einer Ebene, die senkrecht zu einer Höhenrichtung des unteren Gehäuseteils (11) verläuft, schräg ist, wobei das obere Gehäuseteil (12) eine zweite Passfläche (14) aufweist, wobei die zweite Passfläche (14) dazu eingerichtet ist, mit der ersten Passfläche (13) in Eingriff zu kommen, und wobei, wenn die zweite Passfläche (14) mit der ersten Passfläche (13) in Eingriff ist, die erste Passfläche (13) parallel zu der zweiten Passfläche (14) verläuft.

7. Ohrhörergehäuse (100) nach Anspruch 6, wobei die erste Passfläche (13) in einer einwärts bzw. nach innen gerichteten Richtung nach unten geneigt ist.

8. Ein kabelloser Ohrhörer (200), umfassend:
einen linken Ohrhörer (310) und einen rechten Ohrhörer (320); und
ein Ohrhörergehäuse (100) nach einem der Ansprüche 1 bis 7, wobei der linke Ohrhörer (310) und der rechte Ohrhörer jeweils in der ersten Aufnahmenut (1111) bzw. der zweiten Aufnahmenut (1112) angeordnet sind, wobei der Schaft des linken Ohrhörers (310) ein erstes Magnetelement (430) umfasst, das dazu eingerichtet ist, die Magnete (410, 420), die der ersten Aufnahmenut (1111) entsprechen, anzuziehen, und wobei der Schaft des rechten Ohrhörers (320) ein zweites Magnetelement (440) umfasst, das dazu eingerichtet ist, die Magnete (410, 420), die der zweiten Aufnahmenut (1112) entsprechen, anzuziehen.

9. Kabelloser Ohrhörer (200) nach Anspruch 8, wobei das Ohrhörergehäuse (100) das Ohrhörergehäuse (100) nach Anspruch 1 ist,
wobei der erste Magnetpol des ersten Magneten (410), der der ersten Aufnahmenut (1111) entspricht, einem ersten Magnetpol des ersten Magnetelements (430) entgegengesetzt ist und wobei der erste Magnetpol und der zweite Magnetpol des zweiten Magneten (420), der der ersten Aufnahmenut (1111) entspricht, dem ersten Magnetpol beziehungsweise einem zweiten Magnetpol des ersten Magnetelements (430) entgegengesetzt sind;
wobei der erste Magnetpol des ersten Magneten (410), der der zweiten Aufnahmenut (1112) entspricht, einem ersten Magnetpol des zweiten Magnetelements (440) entgegengesetzt ist und wobei der erste Magnetpol und der zweite Magnetpol des zweiten Magneten (420), der der zweiten Aufnahmenut (1112) entspricht, dem ersten Magnetpol beziehungsweise einem zweiten Magnetpol des zweiten Magnetelements (440) entgegengesetzt sind.

10. Kabelloser Ohrhörer (200) nach Anspruch 8 oder 9, wobei die Magnetpole des ersten Magnetelements (430) den Magnetpolen des zweiten Magnetelements (440) entgegengesetzt sind.

11. Kabelloser Ohrhörer (200) nach einem der Ansprüche 8 bis 10, wobei die erste Aufnahmenut (1111) und die zweite Aufnahmenut (1112) jeweils eine profilierte Nut sind, wobei der linke Ohrhörer (310) in profilierter Weise mit einer Nutwandfläche der ersten Aufnahmenut (1111) in Eingriff ist und wobei der rechte Ohrhörer (320) in profilierter Weise mit einer Nutwandfläche der zweiten Aufnahmenut (1112) in Eingriff ist.

## Revendications

1. Un boîtier d'écouteurs (100), comprenant :
un boîtier supérieur (12) ; et
un boîtier inférieur (11), le boîtier supérieur (12) étant raccordé au boîtier inférieur (11), le boîtier inférieur (11) comportant une première gorge de réception (1111) et une deuxième gorge de réception (1112), et la première gorge de réception (1111) et la deuxième gorge de réception (1112) étant configurées pour recevoir un écouteur gauche (310) et un écouteur droit (320), respectivement,
le boîtier inférieur (11) comprenant une pluralité d'aimants (410, 420) correspondant à chacune de la première gorge de réception (1111) et de la deuxième gorge de réception (1112) en termes de positions, les aimants (410, 420) correspondant à la première gorge de réception (1111) étant configurés pour attirer une tige de l'écouteur gauche (310), et les aimants (410, 420) correspondant à la deuxième gorge de réception (1112) étant configurés pour attirer une tige de l'écouteur droit (320),
le boîtier inférieur (11) comprenant une coque externe (114) et une coque intermédiaire (115), la coque intermédiaire (115) étant disposée dans la coque externe (114), et la première gorge de réception (1111) et la deuxième gorge de réception (1112) étant toutes deux définies dans la coque intermédiaire (115),
la première gorge de réception (1111) et la deuxième gorge de réception (1112) comportant chacune une ouverture dans une face supérieure et une face latérale de la coque intermédiaire (115), l'ouverture dans la face supérieure étant configurée comme une ouverture supérieure, et l'ouverture dans la face latérale étant configurée comme une ouverture latérale,
la première gorge de réception (1111) et la deuxième gorge de réception (1112) comprenant chacune une première face de paroi latérale (112) et une deuxième face de paroi latérale (113), la première face de paroi latérale (112) et la deuxième face de paroi latérale (113) formant un angle entre elles, les aimants (410, 420) correspondant à chacune de la première gorge de réception (1111) et de la deuxième gorge de réception (1112) comprenant un premier aimant (410) opposé à la première face de paroi latérale (112) et un deuxième aimant (420) opposé à la deuxième face de paroi latérale (113),
une direction de pôle magnétique du deuxième aimant (420) étant parallèle à un plan de la deuxième face de paroi latérale (113), de sorte qu'un premier pôle magnétique et un deuxième pôle magnétique du deuxième aimant (420) présentent tous deux un côté tourné vers l'ouverture latérale,
**caractérisé en ce qu'**une direction de pôle magnétique du premier aimant (410) est perpendiculaire à un plan de la première face de paroi latérale (112), de sorte qu'un premier pôle magnétique du premier aimant (410) est tourné vers l'ouverture latérale et un deuxième pôle magnétique du premier aimant (410) est tourné à l'opposé de l'ouverture latérale.

2. Boîtier d'écouteurs (100) selon la revendication 1, dans lequel le premier aimant (410) correspondant à la première gorge de réception (1111) et le premier aimant (410) correspondant à la deuxième gorge de réception (1112) sont symétriques par miroir.

3. Boîtier d'écouteurs (100) selon l'une quelconque des revendications 1 à 2, dans lequel le boîtier inférieur (11) comporte une saillie (116) située entre la première gorge de réception (1111) et la deuxième gorge de réception (1112), de manière à séparer partiellement la première gorge de réception (1111) de la deuxième gorge de réception (1112).

4. Boîtier d'écouteurs (100) selon l'une quelconque des revendications 1 à 3, dans lequel la première gorge de réception (1111) et la deuxième gorge de réception (1112) comportent chacune une première face de paroi de fond (117) et une deuxième face de paroi de fond (118), la première face de paroi de fond (117) étant plus haute que la deuxième face de paroi de fond (118),
la première face de paroi de fond (117) de la première gorge de réception (1111) étant configurée pour venir en butée contre un embout d'écouteur de l'écouteur gauche (310), et la deuxième face de paroi de fond (118) de la première gorge de réception (1111) étant configurée pour supporter un fond de la tige de l'écouteur gauche (310),
la première face de paroi de fond (117) de la deuxième gorge de réception (1112) étant configurée pour venir en butée contre un embout d'écouteur de l'écouteur droit (320), et la deuxième face de paroi de fond (118) de la deuxième gorge de réception (1112) étant configurée pour supporter un fond de la tige de l'écouteur droit (320).

5. Boîtier d'écouteurs (100) selon la revendication 4, dans lequel l'ouverture supérieure de chacune de la première gorge de réception (1111) et de la deuxième gorge de réception (1112) comprend une première partie d'ouverture (1191) correspondant à la première face de paroi de fond (117) et une deuxième partie d'ouverture (1192) correspondant à la deuxième face de paroi de fond (118), et un bord de la première partie d'ouverture (1191) est plus éloigné d'un axe central du boîtier d'écouteurs (100) qu'un bord de la deuxième partie d'ouverture (1192).

6. Boîtier d'écouteurs (100) selon l'une quelconque des revendications 1 à 5, dans lequel un bord extérieur du boîtier inférieur (11) comporte une première surface d'ajustement (13), la première surface d'ajustement (13) étant oblique par rapport à un plan orthogonal à une direction de hauteur du boîtier inférieur (11), le boîtier supérieur (12) comportant une deuxième surface d'ajustement (14), la deuxième surface d'ajustement (14) étant configurée pour s'ajuster avec la première surface d'ajustement (13), et, lorsque la deuxième surface d'ajustement (14) est ajustée avec la première surface d'ajustement (13), la première surface d'ajustement (13) étant parallèle à la deuxième surface d'ajustement (14).

7. Boîtier d'écouteurs (100) selon la revendication 6, dans lequel la première surface d'ajustement (13) est inclinée vers le bas dans une direction vers l'intérieur.

8. Un écouteur sans fil (200), comprenant :
un écouteur gauche (310) et un écouteur droit (320) ; et
un boîtier d'écouteurs (100) selon l'une quelconque des revendications 1 à 7, dans lequel l'écouteur gauche (310) et l'écouteur droit sont logés dans la première gorge de réception (1111) et la deuxième gorge de réception (1112), respectivement, la tige de l'écouteur gauche (310) comprenant un premier élément magnétique (430) configuré pour attirer les aimants (410, 420) correspondant à la première gorge de réception (1111), et la tige de l'écouteur droit (320) comprenant un deuxième élément magnétique (440) configuré pour attirer les aimants (410, 420) correspondant à la deuxième gorge de réception (1112).

9. Écouteur sans fil (200) selon la revendication 8, dans lequel le boîtier d'écouteurs (100) est le boîtier d'écouteurs (100) selon la revendication 1,
le premier pôle magnétique du premier aimant (410) correspondant à la première gorge de réception (1111) étant opposé à un premier pôle magnétique du premier élément magnétique (430), et le premier pôle magnétique et le deuxième pôle magnétique du deuxième aimant (420) correspondant à la première gorge de réception (1111) étant opposés au premier pôle magnétique et à un deuxième pôle magnétique du premier élément magnétique (430), respectivement ;
le premier pôle magnétique du premier aimant (410) correspondant à la deuxième gorge de réception (1112) étant opposé à un premier pôle magnétique du deuxième élément magnétique (440), et le premier pôle magnétique et le deuxième pôle magnétique du deuxième aimant (420) correspondant à la deuxième gorge de réception (1112) étant opposés au premier pôle magnétique et à un deuxième pôle magnétique du deuxième élément magnétique (440), respectivement.

10. Écouteur sans fil (200) selon la revendication 8 ou 9, dans lequel les pôles magnétiques du premier élément magnétique (430) sont opposés aux pôles magnétiques du deuxième élément magnétique (440).

11. Écouteur sans fil (200) selon l'une quelconque des revendications 8 à 10, dans lequel chacune de la première gorge de réception (1111) et de la deuxième gorge de réception (1112) est une gorge profilée, l'écouteur gauche (310) étant logé de manière profilée avec une face de paroi de gorge de la première gorge de réception (1111), et l'écouteur droit (320) étant logé de manière profilée avec une face de paroi de gorge de la deuxième gorge de réception (1112).
